# EUROPEAN PATENT SPECIFICATION

(11) **EP 1 110 393 B1**
(45) Date of publication and mention of the grant of the patent: **29.05.2002**
(21) Application number: 99951394.8
(22) Date of filing: 31.08.1999
(51) Int. Cl.: H04N 5/913, H04N 7/167, H04N 7/24

(54) **A COPY PROTECTION SYSTEM FOR HOME NETWORKS**
KOPIERSCHUTZSYSTEM FÜR HAUSNETZWERKE
SYSTEME DE PROTECTION CONTRE LA COPIE POUR RESEAUX DOMESTIQUES

(30) Priority: 31.08.1998 US 98501 P
(43) Date of publication of application: 27.06.2001
(73) Proprietor: Thomson Licensing S.A., 92648 Boulogne Cedex (FR)
(72) Inventor: ESKICIOGLU, Ahmet, Mursuit, Indianapolis, IN 46250 (US); BEYERS, William, Wesley, Jr., Carmel, IN 46033-9046 (US)
(74) Representative: Kohrs, Martin
(86) International application number: US9919700
(87) International publication number: WO0013412

(56) References cited:
- EP-A- 0 714 204
- EP-A- 0 763 936
- EP-A- 0 858 184
- EP-A- 0 860 823
- EP-A- 0 912 052
- WO-A-97/25816
- FR-A- 2 732 537
- "FUNCTIONAL MODEL OF A CONDITIONAL ACCESS SYSTEM" EBU REVIEW- TECHNICAL,BE,EUROPEAN BROADCASTING UNION. BRUSSELS, no. 266, 21 December 1995 (1995-12-21), pages 64-77, XP000559450 ISSN: 0251-0936

## Description

### Field of the Invention

This invention concerns a system that may be used to manage access to a copy of a scrambled digital stream, such as a program or event. The scrambled digital stream is not descrambled until it is determined that the copy of the program is legitimate.

### Background of the Invention

Today's NTSC televisions receive broadcast services from a variety of service providers. Some television receivers are capable of receiving unscrambled information or programs from broadcast, satellite and cable networks. Traditionally, cable networks or digital satellite systems providing scrambled or encrypted programs usually require a separate stand-alone device (e.g., a set-top box) to descramble or decrypt the program. These set-top boxes may utilize a removable smart card which contain the necessary decrypting algorithms and keys.

EP-A-0 912 952 discloses recording of encrypted digital data, wherein scrambled data accompanied by an encrypted control word is received, the control word is decrypted and re-encrypted to a different control word.

In the context of digital video recording, EP-A-0 763 936 discloses reception of scrambled data accompanied by encrypted control information, decrypting and modifying the control information, and re-encrypting the modified control information.

In the same context, EP-A-0 714 204 discloses reception of a scrambled bitstream accompanied by an encrypted keystream, wherein in a recording mode the keystream is accordingly modified and recorded in an encrypted format mixed with the bitstream.

EP-A-0 858 184 discloses replacing an entitlement control message (ECM) received along with scrambled digital data with a transformed entitlement control message.

FR-A-2 732 537 also discloses re-encrypting control information received along with digital video data.

In the near future, digital televisions (DTVs) and digital set-top boxes (STBs) will be capable of receiving digital broadcast, cable and satellite services. Therefore, the protection of digital video and audio content has become one of the major issues for the Information Technology (IT), Consumer Electronics (CE) and Motion Picture (MP) industries. Analog services can be protected reasonably well using a signal distortion mechanism. As a similar solution is not possible for digital content, a new approach for delivering digital audio and video content with adequate protection against illegal duplication is needed.

### Summary of the Invention

The present invention resides, in part, in recognition of the described problem and, in part, in providing a solution to this problem. A method is described for preventing the use of unauthorized copies of digital content (e.g., movies, etc.). The content, presented in MPEG-2 Transport Stream format, is scrambled using a common algorithm before release. The scrambling keys and other data are included in the Entitlement Control Messages (ECMs) that may be encrypted with the public key of a renewable security device (for example, a removable smart card). The other data includes the price and source (broadcast or pre-recorded) of the content (or program) and Copy Control Information (CCI).

Before recording a program, the recording device, connected to the home network, first checks if the program is scrambled. If scrambled content is detected, the recorder attaches a "copy-mark" or "data item" to each ECM in the new copy and encrypts them with the public key. The data item indicates that the restricted program (actually, that the audio/video component) has been copied.

In general, every time a scrambled content is copied, its ECMs are encrypted once again. This process, called ECM nesting, allows the renewable security device coupled to the display unit (e.g., Digital TV) to distinguish between legitimate and illegitimate copies.

An event or program as described herein comprises one of the following (1) audio/visual data such as a movie, weekly "television" show or a documentary; (2) textual data such as an electronic magazine, paper, or weather news; (3) computer software; (4) binary data such as images or (5) HTML data (e.g., web pages). A service provider may comprise any provider of an event or program, for example, traditional broadcast television networks, cable networks, digital satellite networks, providers of electronic list of events, such as electronic program guide providers, and in certain cases internet service providers.

A system in accordance with the present invention may utilize public key technology. Typically, such a system utilizes one public key (corresponding to a smart card) for all service providers. Each smart card has stored therein a secret private key that can decrypt messages encrypted by the public key. The service provider sends a conditional access (CA) entitlement message (i.e., an Entitlement Control Message or ECM) in the bit stream encrypted by the public key that may contain the name of the service provider, and the name, time, and cost of the program. This message is decrypted by the smart card, and the appropriate information is stored therein. In one embodiment, the smart card may have a certain amount of credit for purchases that has been enabled by a bank or from a service provider. As long as the limit is not exceeded, services can be purchased by the user. At some appropriate preprogrammed time, the smart card causes the device (e.g., set-top box) to automatically place a telephone call to the CA center. Using a secure channel, the CA center in cooperation with a bank receives billing information from the smart card and provides additional credit. The bank forwards the information and credits the appropriate service provider.

Generally, the present invention defines a method for managing access (i.e., viewing) to a copy of a restricted (or scrambled) broadcast or transmitted program. In accordance with one aspect of the present invention, a method for copying a program having a scrambled program content component (for example, an audio/video program) and an encrypted control component (e.g., ECM) is defined. The method comprises receiving the program in a recording apparatus, and attaching a data item to the encrypted control component. The data item is used to indicate that the program has been copied. Finally, the encrypted control component and the data item together are encrypted to generate a nested control component.

In accordance with another aspect of the present invention, a method for managing access to a copy of a restricted program comprises receiving the restricted program in a processing apparatus. The nested control component is decrypted to obtain the encrypted control component and the data item. The encrypted control component is then decrypted to obtain a descrambling key and copy control information. The data item and the copy control information is compared to determine if the copy is authorized (or valid) and, if authorized, the program contentcomponent is descrambled using the descrambling key.

In accordance with yet another aspect of the present invention, the method for managing access to the recorded copy of a restricted program employs a smart card coupled to a video processing apparatus. Particularly, the method comprises transferring a cash reserve and entitlements to the smart card, receiving the recorded copy of the restricted program in the smart card, obtaining a descrambling key, copy control information and purchase information, comparing the copy control information and the data item to determine if said copy is authorized and verifying that the cost of the restricted program is less than the stored cash reserve. The cost of the restricted program is then deducted from the stored cash reserve, and the audio/video component is descrambled using the descrambling key. It is within the scope of the invention to substitute a "time model for the "cost model", that is, the amount of time that a program is authorized to be viewed may be controlled.

These and other aspects of the invention will be explained with reference to a preferred embodiment of the invention shown in the accompanying Drawings.

### Brief Description of the Drawings

Figure 1 is a block diagram illustrating a home network comprised of various digital devices that may receive scrambled content from a plurality of sources;
Figure 2a is a diagram defining a typical entitlement control message (ECM);
Figure 2b is a diagram defining a nested ECM in accordance with one embodiment of the present invention;
Figure 2c is a diagram defining an Extended ECM in accordance with another embodiment of the present invention; and
Figure 3 is a block diagram illustrating a typical home network employing the present invention.

### Detailed Description of the Drawings

The present invention provides a conditional access system, which may be utilized to manage access to copies of restricted programs, for example, scrambled (or encrypted) programs. A conditional access system may be integrated into a renewable security device, such as a smart card complying to the National Renewable Security Standard (NRSS), EIA-679 Part A or Part B. The conditional access system, when implemented within a digital television (DTV), set-top box (STB), or the like, permits a user to view only legitimate copies of the scrambled program. The functionality of the smart card may be embedded within the DTV or STB.

A Certificate Authority (not shown) issues digital certificates and public and private key pairs, which are used as explained below. It is within the scope of this invention that the role of the certificate authority may be performed by the service providers in collaboration with the manufacturers of the devices. A billing center may be utilized to manage the user's accounts; updated information is provided as users make arrangements to purchase additional services and as these services are consumed or used.

Broadcasters are responsible for delivering: (1) the services, and (2) the entitlement messages (entitlement control messages) that allow any user to buy those services. The broadcast channel is used only to deliver the services and information for access to these services. All the remaining transactions are carried out using a return channel (i.e., a modem and a phone connection or a cable modem). The present conditional access system may be based on E-cash card loading. A user pre-loads his/her card with a certain amount of cash (from debit or credit accounts), and then uses the card to buy services as described below.

If a return channel connection is not available to communicate with the CA server, then loading cash to the card requires the user to either access a device with back-channel support or go to a particular location (bank, ATM, vendor's regional office) to have the card loaded. The CA operators act like the card holder's or user's bank, while the billing center acts like the merchant's bank. The fixed amount of "cash" loaded into the renewable security device, for example, a removable smart card or conditional access module, can now be used to pay for services offered by a broadcaster or for the viewing of a recorded program. Whichever cash transfer mechanism is employed, the user requests a transfer of a specific amount of money to the CA card from a credit or debit account.

Once money is loaded into the card, a user can buy any number of services offered by broadcasters or, perhaps, may be used to purchase "viewing rights" for the recorded program. Each purchase reduces the amount of available money in the card by the service price. The services offered by broadcasters can be classified into two categories; PPV events and packages. An event is a TV program with an allocated slot in a program guide, and a package is simply a collection of events. Examples of packages are (1) all the football games in a given season, (2) the late Sunday movies on one or more ATSC virtual channels, (3) subscription to a particular virtual channel such as HBO. All events usually have one or more of their audiovisual streams scrambled using a common or shared symmetric key algorithm.

Upon purchase of an event or package, a record may be stored in the smart card which may be later transferred to the CA vendor. Once the stored purchase information is sent to the CA database, the CA vendor can pay broadcasters for the provided services.

The security of the system may be based on standard and widely accepted public key and symmetric key algorithms. For example, suitable algorithms include RSA for public key encryption and triple DES and/or single DES for symmetric key scrambling. In an exemplary system utilizing these algorithms, there is a global RSA public/private key pair, Kpub/Kpri, for the entire system. The public key is shared by all the broadcasters, and the corresponding private key is placed in the tamper-proof NRSS-based smart cards, distributed by the CA providers to the consumers. This public key is used to protect the ECMs generated at the head-end. It is within the scope of this invention that a scrambling algorithm may be a cipher other than DES.

Symmetric key cryptography involves the use of the same key for both encryption and decryption. The foundation of public-key cryptography is the use of two related keys, one public and one private. The private key is a secret key, and it is computationally unfeasible to deduce the private key from the public key, which is publicly available. Anyone with a public key can encrypt a message, but only the person or device having the associated and predetermined private key can decrypt it.

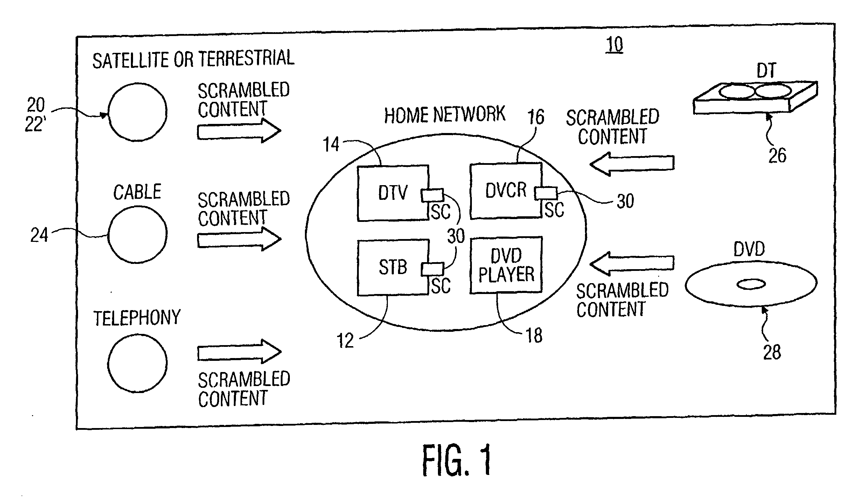

A digital home network 10, as depicted in Figure 1, is a cluster of digital audio/visual (AN) devices including set-top-boxes 12, TVs 14, VCRs 16, DVD players 18 and general-purpose computing devices (not shown) such as personal computers. Several digital interfaces will be available for device interconnection within home networks. For example, EIA-775 DTV 1394 Interface Specification defines a specification for a baseband digital interface to a DTV which is based on the IEEE 1394 Standard for High Performance Serial Bus. The IEEE 1394 serial bus allows digital devices such as televisions, VCRs, DVD players and set-top-boxes to communicate with each other. It provides two types of transport: asynchronous transport for "guaranteed delivery", and the optional isochronous transport for "guaranteed timing." (Isochronous channels are required for multimedia applications.) EIA-761 DTV Remodulator Specification with Enhanced OSD Capability and EIA-762 DTV Remodulator Specification defines minimum specifications for a one-way data path utilizing an 8 VSB and a 16 VSB remodulator, respectively, in compliance with ATSC Standard A/53 Annex D.

The present invention defines a new paradigm for copy protection within a digital home network. This paradigm allows the copying of digital content that may either be broadcast or pre-corded. The copy is checked for legitimacy before display.

Further, as depicted in Figure 1, original copyrighted content is delivered to the home network 10 from a number of sources. It may be transmitted via satellite 20, terrestrial 22 or cable 24 systems or recorded on a digital tape 26 or a DVD 28. Transmitted or recorded on media, the content can be identified as "never-copy", "copy-once" and "free-copy". These three states are represented using the Copy Generation Management System (CGMS) bits. (The CGMS bits are a part of the CCI.) All the AN devices in the cluster should obey "playback control", "record control" and "one-generation control" rules as summarized below.

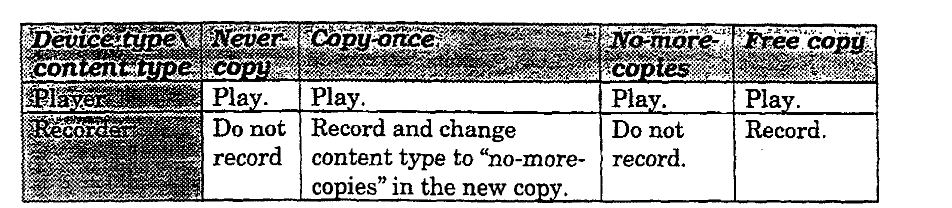

A copy protection system must protect the transmission of the audio/video content from one A/V device to another, and must protect the storage of the audio/video content. The present invention defines solutions to both of these problems by "keeping content scrambled until it is displayed". It allows recording of scrambled content, but prohibits viewing if the content is not legitimate (i.e., not an original or a one-generation copy). This is in contrast with the recording rules as defined in the above table.

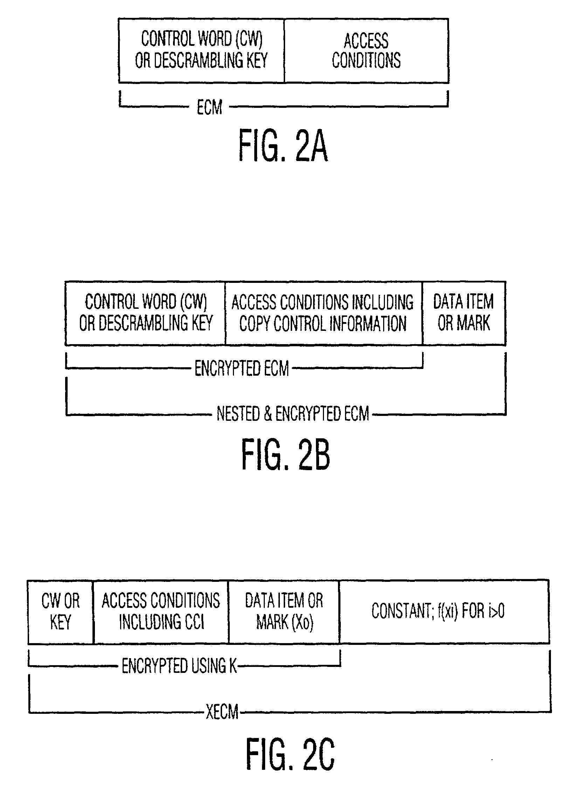

Particularly, Figure 1 illustrates a typical home network comprised of various digital audio/video devices capable of receiving digital content (e.g., a movie) where the present invention may be employed. The digital content is encoded with MPEG-2 Transport Stream (TS) format and broadcast together with the Entitlement Control Messages (ECMs). An ECM (see Figure 2a) is a cryptogram of the control word (i.e., descrambling key) and the access conditions.

The STB or DTV receives the scrambled A/V stream from a source (broadcast head-end or player) and transmits it directly to a smart card. The smart card (SC) 30 is inserted into, or coupled to, a smart card reader (not shown); an internal bus interconnects the STB or DTV and the smart card thereby permitting the transfer of data therebetween. Such smart cards include, for example, ISO 7816 cards complying with National Renewable Security Standard (NRSS) Part A or PCMCIA cards complying with NRSS Part B. As stated above, this inventive concept is not limited to smart cards per se, but can be employed with any renewable security device. Conceptually, when a smart card is coupled to a smart card reader, the functionality of the smart card may be considered to be a part of the functionality of the digital television, thus removing the "boundaries" created by the physical card body of the smart card.

The smart card checks if the content is legitimate, recovers the DES keys, and descrambles the stream after checking the entitlement. (An on-screen display message (OSD) prompts the consumer to initiate a purchase offer just before the movie starts.) A subscription entitlement is stored in the card, but an event entitlement is transmitted with the event and used to generate the purchase offer).

Two unique, but related, methods for differentiating copies from an original and then verifying if the copy is legitimate prior to enabling the user to view the copy are defined below. In either method when the scrambled program is to be recorded, the first thing the recording device (e.g., a DVCR or a DVD recorder) does is to verify whether the program is scrambled. This may be achieved by checking for ECMs which are identified by their packet identification (PID) in the packet header. One alternative would be to check the Transport Scrambling Control (TSC) bits in the transport packet header. Another method would be to ascertain whether the program is scrambled as described below. The MPEG video syntax includes byte-aligned 32 bit fields called "start codes" that indicate synchronizing points in the bit stream. For example, there are "picture start codes" (Ox 00 00 01 00) at the beginning of each frame in the MPEG video bit stream. These frames can occur at 60, 50, 30, or 24 frames per second (fps). Therefore, a simple test would be to look for picture start codes in the bitstream. If the rate of picture start codes per second is close to one of the possible rates, then it is reasonable to assume that the bit stream is not encrypted.

In one embodiment of the present invention if the content is scrambled, the recorder encrypts the ECMs using the global public key. Before encryption takes place, the recorder attaches a mark (or data item) (see Figure 2b) to each ECM as an indication of copying. In general, every time a scrambled movie is copied, its ECMs are encrypted once again, a process that may be referred to as nesting. This allows the smartcard to determine how many times the original movie has been copied. The following example (wherein GPK is the Global public key, E is the Encryption process, CW is the Control word (the key for descrambling) and ECM contains CW, CCI, source of the content and other data) detects an illegitimate copy and prevents the display thereof.

Assume an ECM of the movie has the form: E_{GPK}(CW, never-copy). If a recorder receives this ECM, it will transform it to: E_{GPK} [E_{GPK}(CW, never-copy), copy-mark)]. The movie with this nested ECM will be the output of the recording process. When a user attempts to view it, the smart card will detect that it is a copy of a "never-copy" content and will not allow display. If the movie is a "copy-once" content, the ECM will be in the form: E_{GPK} [E_{GPK}(CW, copy-once), copy-mark)] in the copy. This is an indication of a legitimate copy and the smart card will allow viewing. However, if a copy of a copy is created, the ECM will have two layers of nesting, for example, (E_{GPK} {E_{GPK} (E_{GPK}(CW, copy-once), copy-mark)], copy-mark}], and the copy will be detected to be illegitimate.

One way to increase the security of the copy protection system is to use a local public key for recording purposes. This requires a smart card with a unique public/private key pair. For copying a movie, the smart card is coupled to the VCR and provides the public key. The public key is then used to encrypt the ECMs to create a copy that can be played only with the corresponding unique private key.

Another option to increase the security of the system is to attach a unique recorder ID together with the copy-mark during the ECM nesting process. This additional information creates a binding between the copy and the recorder. Further, both the recorder and the smart card would have the same recorder ID. Therefore, viewing of the copy would only be possible with the smart card having the recorder ID.

Every copyrighted (and encrypted) digital content shall be available to be copied on any recorder. The created copy, if legitimate, can then be viewed according to the rules of an established payment system. If, for example, a DTV receives a scrambled program without a nested ECM, then the DTV would treat the program as if it was an original scrambled program and not a copy. That is, the DTV would allow the program to be viewed. However, if the user wished to make a copy of the "original program", then the ECM and a data item would together be encrypted in accordance with the present invention.

In an alternate embodiment of the present invention, the ECMs are extended to contain the CGMS bits and access rights as well as control words. Every time copyrighted content (e.g., a movie) is recorded, the extended ECMs (XECMs) are modified through a one-way, irreversible transformation (for example, hashing) to distinguish copies from the original. A function *f* from a set X to a set Y is called a *one-way function* if *f* (*x*) is easy to compute for all *x* ∈ X but for essentially all *y*∈ lm( *f* ), it is computationally infeasible to find any *x* ∈*X* such that *f (x) = y.*

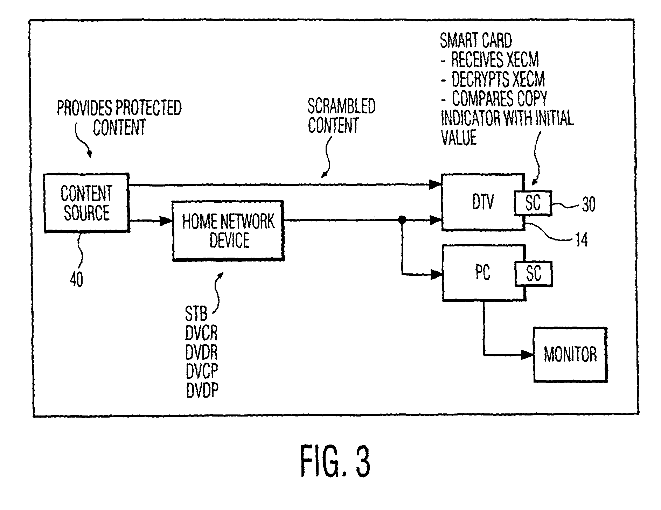

When the smart card receives the XECMs, it processes them depending on the type of the system. Two functionally distinct systems can be accommodated within this architecture: Conditional Access (CA) systems and Copy Protection (CP) systems.
(i) CA system: The smart card is a component of a CA system. Before viewing is allowed, the smart card checks how many times the XECMs are modified and responds according to the pre-defined rules of the CA system.
(ii) CP system: The smart card is a component of a CP system. The functionality of the smart card is limited. It checks the legitimacy of the content and prevents the viewing of illegitimate copies.
The processing of XECMs will be explained using the following example and referring to Figures 2C and 3. Assume a movie is being copied on a DVCR. Its XECM syntax is defined to be XECM = E_{K}(CW, D/T, content type, *x*₀),*x*ᵢ, where *x*₀ = *x*₁, *x*ᵢ₊₁ = *f* (*x*) for i > 0 and E is the encryption process, K is the encryption key, CW is the control word, D/T is the date and time stamp, *x*₀ is a random number, and *f* is a one-way function.
(a) Content type is "never-copy":
   - Recorder input:: E_{K}(CW, D/T, "never-copy", *x*₀), *x*₁
   - Recorder output:: E_{K}(CW, D/T,"never-copy", *x*₀), *x*₂
   When the user attempts to view the copy, the card will, after decrypting the XECM, compare x₀ and x₂. If they are not equal, display will not be allowed.
(b) Content type is "copy-once":
   - Recorder input:: E_{K}(CW, D/T, "copy-once", *x*₀),*x*₁
   - Recorder output:: E_{K}(CW, D/T, "copy-once", *x*₀), *x*₂
   This time the comparison of x₀ and x₂ will reveal that the copy is legitimate. If, however, the 1st generation copy is the input to the recorder, the output will be illegitimate since f ( f (x₀) ) = x₃. Note that the XECMs are modified without consideration of the number of modifications already made.

In CA systems, the D/T stamp field allows detection of copies made by a pirated recorder. When a card detects an "old" XECM that has not been modified, it will consider it to be a pirate copy. In CP systems, the D/T stamp can be used to assign limited lifetime to prerecorded media and authorized copies made from them.

A very important feature of the "XECM modification" scheme is that it gives the content distributors (broadcasters and publishers) complete freedom in choosing their encryption algorithm for creating the XECMs. Hence, although the copy protection system is constructed as an extension of the CA systems, it is "decoupled". The only requirement is to use the common structure for the XECM.

As described below, the XECM originating at the content source has two sections: Private and Mandatory. The Private section contains fields that are privately defined by the operators of CA and CP systems. The Mandatory section contains three fields that must be included in all XECMs.

The fields in the Private section of the XECM include: XECM_id (Unique identifier for the Extended Entitlement Control Message), XECM_length (an 8-bit field specifying the number of bytes in the XECM), format_identifier (a 32-bit field that identifies the registration authority that assigns values to the provider_index field), provider_index (a 16-bit field that identifies the content provider), program_event_id (a 24-bit field that identifies a particular TV program or event), transport_stream_id (a 16-bit field that identifies the Transport Stream where the event is being carried), source_id (a 16-bit field that identifies uniquely the particular service where the event is being transmitted), event_id (a 14-bit field that identifies uniquely a particular event within a given service of this Transport Stream), start_time (a 32-bit field indicating the event start time), length_in_seconds (a 20-bit field indicating the length of the event), title_segment (the first 10 characters of the English title for the event that this message describes), event_price (a BCD field which indicates the cost of the event), scrambling_key (a 64-bit key necessary for de-scrambling the video and audio signals for the event under consideration), descriptors_length (the total length of the descriptor list that follows the descriptors). The Mandatory section of the XECM include: CCI-Copy Control Information (CGMS bits, APS trigger bits and Digital Source bit), copy_indicator_initial_value (a random bit sequence) and copy_indicator (a bit sequence equal to copy_indicator_initial_value).

DTV 14 is the final destination of the digital content 40 for viewing. It receives the scrambled A/V stream from a source (broadcast/cable head-end, satellite, cable STB, DBS STB or playback device) and transmits it directly to the smart card 30. Smart card 30 checks if the content is legitimate. For example, if it receives a broadcast PPV movie, an OSD prompts the consumer to initiate a purchase offer before the movie starts. If the movie is purchased, a record is stored in the card. The card then recovers the scrambling keys and descrambles the stream. The information about the event (price, start time, length, etc.) contained in the XECMs is used to generate the purchase offer. Finally, DTV 14 outputs the same stream it receives.

If a movie is to be recorded, the DVCR detects and modifies the XECMs. In addition, the Transport Scrambling Control (TSC) bits in the transport packet header can be checked to see if the content is scrambled.
If the content is not scrambled, it is copied as is. In general, every time a scrambled movie is copied, its XECMs are modified once again. This allows the smart card to determine how many times the original movie has been copied. Optionally, the XECM modification functionality can be assigned to a smart card inserted to the recorder. In this case, the recorder needs to have a smart card reader.

While the invention has been described in detail with respect to numerous embodiments thereof, it will be apparent that upon reading and understanding of the foregoing, numerous alterations to the described embodiment will occur to those skilled in the art and it is intended to include such alterations within the scope of the appended claims.

## Claims

1. A method for copying a program having a scrambled program content component and an encrypted control component comprising:
(a) receiving, in a recording apparatus, said program;
(b) attaching a data item to said encrypted control component, said data item indicating that said program has been copied;
(c) encrypting said encrypted control component and said data item to generate a nested control component; and
(d) recording said program content component and said nested control component.

2. The method of Claim 1 wherein the steps of receiving, attaching and encrypting are performed in a smart card coupled to said recording apparatus.

3. The method of Claim 2 wherein said encrypted control component comprises copy control information and a descrambling key associated with said scrambled program content component.

4. The method of Claim 3 wherein said copy control information indicates one of a never-copy state and a copy-once state.

5. The method of Claim 4 wherein said encrypted control component is encrypted using a global public key.

6. The method of Claim 5 wherein said nested control component is encrypted using said global public key.

7. The method of Claim 6 wherein said global public key is associated with said smart card, said smart card having a corresponding private key stored therein.

8. The method of Claim 7 wherein said encrypted control component further comprises purchase information comprising channel identification data, event identity data, date and time stamp data, and billing data.

9. The method of Claim 8 including the step of arranging said smart card to comprise a card body with a plurality of terminals arranged on a surface of said card body in accordance with one of ISO 7816 and PCMCIA card standards.

10. The method of Claim 9 wherein said recording apparatus is a digital video cassette recorder.

11. The method of Claim 10 wherein said recording apparatus is a recordable DVD apparatus.

12. A method for managing access to a copy of a restricted program, said method comprising:
(a) receiving said restricted program in a processing apparatus, said restricted program having a scrambled program content component and a nested control component, said nested control component being encrypted;
(b) decrypting said nested control component to obtain an encrypted control component and a data item, said data item indicating that said restricted program has been copied;
(c) decrypting said encrypted control component to obtain a descrambling key and copy control information;
(d) comparing said copy control information and said data item to determine if said copy is valid; and
(e) descrambling said program content component, using said descrambling key in response to a determination that said copy is valid.

13. The method of Claim 12 wherein said encrypted control component and said nested control component are encrypted using a global public key.

14. The method of Claim 13 wherein the steps of receiving, decrypting, comparing and descrambling are performed in a smart card coupled to said processing apparatus, said steps of decrypting employ a private key stored in said smart card and associated with said global public key.

15. The method of Claim 14 wherein said encrypted control component further comprises purchase information comprising channel identification data, event identity data, date and time stamp data, and billing data.

16. The method of Claim 15 wherein said purchase information comprises the cost of said program, said method further comprising:
(a) deducting the cost of said program from a cash reserve stored in said smart card to determine a calculated cash reserve;
(b) descrambling, in said smart card, said scrambled program content component using said descrambling key in response to having a positive calculated cash reserve; and
(c) passing said descrambled transmitted event to said video processing apparatus.

17. The method of Claim 16 wherein said cash reserve is downloaded in an e-cash certificate message from an automatic teller machine.

18. The method of Claim 17 wherein said processing apparatus is one of a digital video cassette recorder/player and a DVD recorder/player.

19. The method of Claim 18 including the step of arranging said smart card to comprise a card body with a plurality of terminals arranged on a surface of said card body in accordance with one of ISO 7816 and PCMCIA card standards.

20. A method for managing access to a recorded copy of a restricted program using a smart card coupled to a video processing apparatus comprises:
(a) transferring, from a bank, a cash reserve to said smart card;
(b) receiving, in said smart card, said recorded copy of said restricted program from said video processing apparatus, said restricted program having a scrambled audio/video component and a nested control component, said nested control component being encrypted;
(c) decrypting said nested control component to obtain an encrypted control component and a data item, said data item indicating that said restricted program has been copied;
(d) decrypting said encrypted control component to obtain a descrambling key, copy control information and purchase information;
(e) comparing said copy control information and said data item to determine if said copy is valid;
(f) verifying that the cost of said restricted program is less than the stored cash reserve and deducting the cost of said restricted program from said stored cash reserve;
(g) descrambling said audio/video component, using said descrambling key.

## Patentansprüche

1. Verfahren zum Kopieren eines Programms mit einer verwürfelten Programminhalts-Komponente und einer verschlüsselten Steuerkomponente mit:
(a) Empfang des Programms in einer Aufzeichnungsvorrichtung,
(b) Zufügung eines Datenwortes zu der verschlüsselten Steuerkomponente, wobei das Datenwort anzeigt, daß das Programm kopiert worden ist,
(c) Verschlüsselung der verschlüsselten Steuerkomponente und des Datenwortes zum Erzeugen einer verschachtelten Steuerkomponente und
(d) Aufzeichnung der Programminhalts-Komponente und der verschachtelten Steuerkomponente.

2. Verfahren nach Anspruch 1, wobei die Schritte des Empfangs, der Zufügung und der Verschlüsselung in einer mit der Aufzeichnungsvorrichtung verbundenen Smart Card erfolgen.

3. Verfahren nach Anspruch 2, wobei die verschlüsselte Steuerkomponente Kopier-Steuerinformationen und einen der verwürfelten Programminhalts-Komponente zugeordneten Entwürfelungsschlüssel enthält.

4. Verfahren nach Anspruch 3, wobei die Kopier-Steuerinformationen einen Zustand mit niemals kopieren und einen Zustand mit einmal kopieren anzeigen.

5. Verfahren nach Anspruch 4, wobei die verschlüsselte Steuerkomponente unter Anwendung eines globalen öffentlichen Schlüssels verschlüsselt ist.

6. Verfahren nach Anspruch 5, wobei die verschachtelte Steuerkomponente unter Anwendung des globalen öffentlichen Schlüssels verschlüsselt ist.

7. Verfahren nach Anspruch 6, wobei der globale öffentliche Schlüssel der Smart Card zugeordnet ist und die Smart Card einen entsprechenden, darin gespeicherten privaten Schlüssel enthält.

8. Verfahren nach Anspruch 7, wobei die verschlüsselte Steuerkomponente außerdem Kaufinformationen enthält, die Daten für eine Kanal-Identifikation, Daten für eine Ereignis-Identität, Daten und Zeitmarkierungsdaten und Berechnungsdaten enthalten.

9. Verfahren nach Anspruch 8 mit dem Schritt der Anordnung der Smart Card, daß diese einen Kartenkörper mit mehreren Anschlußklemmen enthält, die auf einer Fläche des Kartenkörpers entsprechend einer der Kartennormen ISO 7816 und PCMCIA angeordnet sind.

10. Verfahren nach Anspruch 9, wobei die Aufzeichnungsvorrichtung ein digitaler Videokassettenrekorder ist

11. Verfahren nach Anspruch 10, wobei die Aufzeichnungsvorrichtung eine bespielbare DVD-Vorrichtung ist.

12. Verfahren zur Zugriffsverwaltung zu einer Kopie eines eingeschränkten Programms mit:
(a) Empfang des eingeschränkten Programms in einer Verarbeitungsvorrichtung, wobei das eingeschränkte Programm eine verwürfelte Proramminhalts-Komponente und eine verschachtelte Steuerkomponente enthält und die verschachtelte Steuerkomponente verschlüsselt ist,
(b) Entschlüsselung der verschachtelten Steuerkomponente zur Gewinnung einer verschlüsselten Steuerkomponente und eines Datenwortes, wobei das Datenwort anzeigt, daß das eingeschränkte Programm kopiert worden ist,
(c) Entschlüsselung der verschlüsselten Steuerkomponente zur Gewinnung eines Entwürfelungsschlüssels und von Kopier-Steuerinformationen,
(d) Vergleich der Kopier-Steuerinformationen und des Datenwortes, um zu ermitteln, ob die Kopie gültig ist, und
(e) Entwürfelung der Programminhalts-Komponente unter Anwendung des Entwürfelungs-Schlüssels in Abhängigkeit von einer Ermittlung, daß die Kopie gültig ist.

13. Verfahren nach Anspruch 12, wobei die verschlüsselte Steuerkomponente und die verschachtelte Steuerkomponente unter Anwendung eines globalen öffentlichen Schlüssels verschlüsselt werden.

14. Verfahren nach Anspruch 13, wobei die Schritte des Empfangs, der Entschlüsselung, des Vergleiches und der Entwürfelung in einer Smart Card erfolgen, die mit der Verarbeitungsvorrichtung verbunden ist, und die Schritte der Entschlüsselung einen privaten Schlüssel verwenden, der in der Smart Card gespeichert und dem der globale öffentliche Schlüssel zugeordnet ist.

15. Verfahren nach Anspruch 14, wobei die verschlüsselte Steuerkomponente außerdem Kaufinformationen enthält, die Kanal-ldentifikationsdaten, Ereignisidentitätsdaten, Daten und Zeitmarkierungsdaten und Berechnungsdaten enthalten.

16. Verfahren nach Anspruch 15, wobei die Kaufinformationen die Kosten des Programms enthalten, ferner mit:
(a) Ableitung der Kosten des Programms aus einer in der Smart Card gespeicherten Bezahlungsreserve zur Ermittlung einer berechneten Zahlungsreserve,
(b) Entwürfelung der verwürfelten Programminhalts-Komponente in der Smart Card unter Anwendung des Entwürfelungsschlüssels in Abhängigkeit davon, ob eine positive berechnete Zahlungsreserve vorliegt, und
(c) Zuführung des entwürfelten, übertragenen Ereignisses zu der Video-Verarbeitungsvorrichtung.

17. Verfahren nach Anspruch 16, wobei die Zahlungsreserve von einer automatischen Schaltervorrichtung Zahlungs-Kennzeichnungs-Nachricht heruntergeladen wird.

18. Verfahren nach Anspruch 17, wobei die Verarbeitungsvorrichtung ein digitaler Videokassettenrekorder/Spieler oder ein DVD-Rekorder/Spieler ist.

19. Verfahren nach Anspruch 16 mit dem Schritt, daß die Smart Card einen Kartenkörper mit mehreren Anschlußklemmen enthält, die auf einer Oberfläche des Kartenkörpers gemäß den Kartennormen ISO 7816 oder PCMCIA angeordnet sind.

20. Verfahren zur Zugriffsverwaltung zu einer aufgezeichneten Kopie eines eingeschränkten Programms unter Anwendung einer Smart Card, die mit einer Video-Verarbeitungsvorrichtung verbunden ist, mit folgenden Schritten:
(a) Übertragung einer Zahlungsreserve von einer Bank zu der Smart Card,
(b) Empfang der aufgezeichneten Kopie des eingeschränkten Programms von der Video-Verarbeitungsvorrichtung in der Smart Card, wobei das eingeschränkte Programm eine verwürfelte AudioNideo-Komponente und eine verschachtelte Steuerkomponente enthält und die verschachtelte Steuerkomponente verschlüsselt wird,
(c) Entschlüsselung der verschachtelten Steuerkomponente zur Gewinnung einer verschlüsselten Steuerkomponente und eines Datenwortes, wobei das Datenwort anzeigt, daß das eingeschränkte Programm kopiert worden ist,
(d) Entschlüsselung der verschlüsselten Steuerkomponente zur Gewinnung eines Entwürfelungsschlüssels, von Kopier-Steuerinformationen und Kaufinformationen,
(e) Vergleich der Kopier-Steuerinformationen und des Datenwortes, um zu ermitteln, ob die Kopie gültig ist,
(f) Prüfung, daß die Kosten des eingeschränkten Programms kleiner sind als die gespeicherte Zahlungsreserve, und Abbuchen der Kosten des eingeschränkten Programms von der gespeicherten Zahlungsreserve,
(g) Entwürfelung der Audio/Video-Komponente unter Anwendung des Entwürfelungsschlüssels.

## Revendications

1. Procédé pour copier un programme présentant une composante embrouillée de contenu de programme et une composante de contrôle cryptée, comprenant les étapes consistant à :
(a) recevoir ledit programme dans un appareil d'enregistrement ;
(b) attacher un élément de données à ladite composante de contrôle cryptée, ledit élément de données indiquant que ledit programme a été copié ;
(c) crypter ladite composante de contrôle cryptée et ledit élément de données pour créer une composante de contrôle intégrée ; et
(d) enregistrer ladite composante de contenu du programme et ladite composante de contrôle intégrée.

2. Procédé selon la revendication 1, dans lequel les étapes consistant à recevoir, à attacher et à crypter sont exécutées dans une carte à puce couplée audit appareil d'enregistrement.

3. Procédé selon la revendication 2, dans lequel ladite composante de contrôle cryptée comprend des informations de contrôle de copie et une clé de désembrouillage associée à ladite composante embrouillée de contenu de programme.

4. Procédé selon la revendication 3, dans lequel lesdites informations de contrôle de copie indiquent l'un parmi un statut « non copiable » et un « statut copiable une fois ».

5. Procédé selon la revendication 4, dans lequel ladite composante de contrôle cryptée est cryptée en utilisant une clé publique globale.

6. Procédé selon la revendication 5, dans lequel ladite composante de contrôle intégrée est cryptée en utilisant ladite clé publique globale.

7. Procédé selon la revendication 6, dans lequel ladite clé publique globale est associée à ladite carte à puce, une clé privée correspondante étant stockée dans ladite carte à puce

8. Procédé selon la revendication 7, dans lequel ladite composante de contrôle cryptée comprend en outre des informations d'achat comprenant des données d'identification du canal, des données d'identification de l'événement, des données d'estampillage de date et d'heure et des données de facturation.

9. Procédé selon la revendication 8, comprenant les étapes consistant à agencer ladite carte à puce de façon qu'elle comprenne un corps de carte doté d'une pluralité de bornes agencées sur une surface dudit corps de carte en accord avec l'une des normes de carte ISO 7816 et PCMCIA.

10. Procédé selon la revendication 9, dans lequel ledit appareil d'enregistrement est un enregistreur numérique de cassettes vidéo.

11. Procédé selon la revendication 10, dans lequel ledit appareil d'enregistrement est un appareil de DVD enregistrable.

12. Procédé de gestion de l'accès à une copie d'un programme à diffusion contrôlée, ledit procédé comprenant les étapes consistant à :
(a) recevoir ledit programme à diffusion contrôlée dans un appareil de traitement, ledit programme à diffusion contrôlée présentant une composante embrouillée de contenu de programme et une composante de contrôlée intégrée, ladite composante de contrôle intégrée étant cryptée ;
(b) décrypter ladite composante de contrôle intégrée pour obtenir une composante de contrôle cryptée et un élément de données, ledit élément de données indiquant que ledit programme à diffusion contrôlée a été copié ;
(c) décrypter ladite composante de contrôle cryptée pour obtenir une clé de désembrouillage et des informations de contrôle de copie ;
(d) comparer lesdites informations de contrôle de copie et ledit élément de données pour déterminer si ladite copie est valide ; et
(e) désembrouiller ladite composante de contenu du programme en utilisant ladite clé de désembrouillage en réponse à une détermination que ladite copie est valide.

13. Procédé selon la revendication 12, dans lequel ladite composante de contrôle cryptée et ladite composante de contrôle intégrée sont cryptées en utilisant une clé publique globale.

14. Procédé selon la revendication 13, dans lequel les étapes consistant à recevoir, décrypter, comparer et désembrouiller sont exécutées dans une carte à puce couplée audit appareil de traitement, lesdites étapes consistant à décrypter utilisant une clé privée conservée dans ladite carte à puce et associée à ladite clé publique globale.

15. Procédé selon la revendication 14, dans lequel ladite composante de contrôle cryptée comprend en outre des informations d'achat comprenant des données d'identification du canal, des données d'identité de l'événement, des données d'estampillage de date et d'heure et des données de facturation.

16. Procédé selon la revendication 15, dans lequel lesdites informations d'achat comprennent le coût dudit programme, ledit procédé comportant en outre les étapes consistant à :
(a) déduire le coût dudit programme d'une réserve de monnaie stockée dans ladite carte à puce pour déterminer une réserve de monnaie calculée ;
(b) désembrouiller dans ladite carte à puce ladite composante embrouillée du contenu de programme en utilisant ladite clé de désembrouillage en réponse à un résultat positif du calcul de la réserve de monnaie ; et
(c) transférer ledit événement émis désembrouillé audit appareil de traitement vidéo.

17. Procédé selon la revendication 16, dans lequel ladite réserve de monnaie est téléchargée dans un message de certificat de monnaie électronique provenant d'un distributeur automatique.

18. Procédé selon la revendication 17, dans lequel ledit appareil de traitement est l'un parmi un enregistreur/lecteur de cassette vidéo numérique et un enregistreur/lecteur de DVD.

19. Procédé selon la revendication 18, comprenant l'étape consistant à agencer ladite carte à puce de sorte qu'elle comprenne un corps de carte doté d'une pluralité de bornes agencées sur une surface dudit corps de carte, en accord avec l'une des normes de carte ISO 7816 et PCMCIA.

20. Procédé pour gérer l'accès à une copie enregistrée d'un programme à diffusion contrôlée en utilisant une carte à puce couplée à un appareil de traitement vidéo, qui comprend les étapes consistant à :
(a) transférer, d'une banque, une réserve de monnaie sur ladite carte à puce ;
(b) recevoir, dans ladite carte à puce, ladite copie enregistrée dudit programme à diffusion contrôlée en provenance dudit appareil de traitement vidéo, ledit programme à diffusion contrôlée présentant une composante audio/vidéo embrouillée et une composante de contrôle intégrée, ladite composante de contrôle intégrée étant cryptée ;
(c) décrypter ladite composante de contrôle intégrée pour obtenir une composante de contrôle cryptée et un élément de données, ledit élément de données indiquant que ledit programme à diffusion contrôlée a été copié ;
(d) décrypter ladite composante de contrôle cryptée pour obtenir une clé de désembrouillage, des informations de contrôle de copie et des informations d'achat ;
(e) comparer lesdites informations de contrôle de copie et ledit élément de données pour déterminer si ladite copie est valide ;
(f) vérifier que le coût dudit programme à diffusion contrôlée est inférieur à la réserve de monnaie stockée et déduire le coût dudit programme à diffusion contrôlée de ladite réserve de monnaie stockée ;
(g) désembrouiller ladite composante audio/vidéo en utilisant ladite clé de désembrouillage.
